# FASCICULE DE BREVET EUROPEEN

(11) **EP 3 948 029 B1**
(45) Date de publication et mention de la délivrance du brevet: **24.01.2024**
(21) Numéro de dépôt: 20706707.5
(22) Date de dépôt: 21.02.2020
(51) Int. Cl.: F16H 61/32, F16H 63/20, F16H 63/30

(54) **AGENCEMENT POUR LA COMMANDE INTERNE DE SÉLECTION D'UNE BOÎTE DE VITESSES**
ANORDNUNG ZUR INTERNEN AUSWAHLSTEUERUNG EINES GETRIEBES
ARRANGEMENT FOR THE INTERNAL SELECTION CONTROL OF A GEARBOX

(30) Priorité: 27.03.2019 FR 1903189
(43) Date de publication de la demande: 09.02.2022
(73) Titulaire: Renault s.a.s, 92100 Boulogne Billancourt (FR)
(72) Inventeur: GAILLIARD, Fabien, 92500 Rueil-Malmaison (FR); HMAIMID, Kamel, 95100 Argenteuil (FR); SAHRAOUI, Salim, 95400 Villiers-le-Bel (FR); TERRASSE, Didier, 78360 Montesson (FR)
(74) Mandataire: Renault Group
(86) Numéro de dépôt international: PCT/EP2020/054600
(87) Numéro de publication internationale: WO 2020/193028

(56) Documents cités:
- EP-A2- 1 275 886
- EP-A2- 2 085 664
- DE-B3-102004 052 804
- US-A1- 2011 113 913

## Description

### DOMAINE TECHNIQUE DE L'INVENTION

L'invention concerne un agencement pour la commande interne de la sélection de lignes de rapports dans une boîte de vitesses.

L'invention concerne plus particulièrement un agencement comportant un actionneur commandé qui peut appliquer un effort de commande pour provoquer une sélection entre au moins une première ligne et une deuxième ligne de rapports.

### ARRIERE PLAN TECHNIQUE DE L'INVENTION

Dans ce type d'agencement ou de dispositif de commande, il est prévu un organe de commande de sélection qui est monté rotatif, dans les deux sens, entre au moins une première et une deuxième position angulaire de sélection dont chacune est associée à une première ligne de sélection et à une deuxième ligne de sélection respectivement.

L'organe de commande, ou un composant lié à celui-ci, est monté coulissant axialement dans les deux sens, lorsque l'organe de commande occupe l'une ou l'autre des première ou deuxième positions angulaires de sélection pour, par exemple sous l'action d'un actionneur commandé, provoquer le passage de l'un ou l'autre des rapports associés à la ligne de sélection préalablement sélectionnée. Un tel dispositif de commande est connu de DE 10 2004 052804. Un organe de commande semblable mais à commande externe est connu de EP 2 085 664.

Selon une conception connue qui est illustrée notamment dans les documents FR-A1-3.026.808 et/ou FR-A1-3.044.063, il est aussi prévu un moyen de rappel élastique de l'organe de commande vers sa première position angulaire de sélection et un actionneur commandé qui est par exemple un vérin électromagnétique ou électrique qui peut appliquer un effort de commande à l'organe de commande pour provoquer sa rotation depuis sa première position angulaire de sélection vers sa deuxième position, à l'encontre de l'effort de rappel exercé par le moyen de rappel élastique.

L'actionneur commande le coulissement d'une tige selon son axe principal, de manière qu'une extrémité libre de la tige vienne solliciter une face d'actionnement excentrée de l'organe de commande. L'axe de la tige est ainsi agencé globalement orthogonalement à l'axe de pivotement de l'organe de commande. L'actionneur est par exemple un actionneur linéaire ou un vérin qui comporte ladite tige, ou encore un moteur rotatif effectuant plusieurs tours pour commander le coulissement de la tige par l'intermédiaire d'un système vis-écrou, la tige étant alors parallèle ou coaxiale à l'axe du moteur.

Dans une telle conception, lorsque la deuxième ligne de sélection a été sélectionnée par commande de l'actionneur, à l'encontre de l'effort élastique de rappel, et que l'effort appliqué par l'actionneur a été relâché, il existe des frottements entre des éléments liés à l'organe de commande et des organes fixes par rapport à celui-ci sous la charge appliquée par l'effort élastique de rappel. Ces frottements sont susceptibles de provoquer des phénomènes de blocage axiaux, voire d'empêcher le retour vers la position neutre avec sélection à nouveau de la première ligne de rapports.

L'effort d'actionnement exercé par le vérin ou solénoïde est de valeur peu élevée et il est alors impossible à la clef d'inter-verrouillage de « rentrer » les crabots.

De la même manière, en vue de sélectionner la deuxième ligne de sélection en partant de la première ligne de sélection, des phénomènes de frottements peuvent aboutir à des blocages que la valeur insuffisante de l'effort d'actionnement exercé par le vérin ou solénoïde ne permet pas de surmonter.

Le dimensionnement du solénoïde avec son faible effort d'actionnement induit aussi un dimensionnement du ressort de rappel dont la valeur de l'effort de rappel qu'il exerce est peu élevé.

L'invention a pour but de proposer un nouvel agencement comportant une nouvelle conception des moyens d'actionnement et de rappel visant à remédier aux inconvénients mentionnés ci-dessus.

### BREF RESUME DE L'INVENTION

L'invention propose un agencement pour la commande interne de la sélection de lignes de rapports dans une boîte de vitesses qui comporte :
- un organe de commande de sélection qui est monté rotatif, dans les deux sens, entre au moins une première position angulaire de sélection et une deuxième position angulaire de sélection dont chacune est associée à une première ligne de sélection et à une deuxième ligne de sélection respectivement ;
- un actionneur commandé qui peut appliquer un effort d'actionnement à l'organe de commande pour provoquer sa rotation au moins dans un premier sens, depuis sa première position angulaire de sélection vers sa deuxième position angulaire de sélection,
**caractérisé en ce que** l'actionneur est un actionneur rotatif comportant :
- un corps d'actionneur fixe ;
- un arbre d'actionneur susceptible d'être entraîné en rotation sur une course angulaire limitée entre une première position angulaire extrême et une deuxième position angulaire extrême ;
- une manivelle qui est solidaire en rotation de l'arbre et qui comporte un tronçon excentré qui applique l'effort d'actionnement à l'organe de commande pour provoquer sa rotation dans le premier sens.

Un tel actionneur est susceptible de produire un effort d'actionnement qui est supérieure aux efforts produits par des actionneurs linéaires. De plus un tel actionneur permet une commande très rapide de l'organe de commande.

Selon d'autres caractéristiques de l'invention :
- l'axe de rotation de l'arbre d'actionneur est orthogonal à l'axe de rotation de l'organe de commande ;
- l'effort d'actionnement est transmis à l'organe de commande par l'intermédiaire d'un levier qui est monté pivotant autour d'un axe parallèle à l'arbre d'actionneur sur une platine fixe par rapport au corps d'actionneur, ceci permet notamment de démultiplier l'effort transmis par l'arbre d'actionneur à l'organe de commande ;
- le levier présente un premier tronçon de liaison avec la manivelle et un deuxième tronçon de liaison avec l'organe de commande, la distance entre le premier tronçon et l'axe de pivotement du levier étant supérieure à la distance entre le deuxième tronçon et l'axe de pivotement du levier ;
- la liaison entre le deuxième tronçon du levier et l'organe de commande est réalisé par une tête portée par l'un des deux éléments parmi le levier ou l'organe de commande, la tête étant en contact avec au moins une palette radiale portée par l'autre desdits deux éléments ;
- l'agencement comporte au moins un moyen de rappel en rotation de l'organe de commande vers sa première position angulaire de sélection ;
- un moyen de rappel élastique est interposé entre le corps de l'actionneur et l'arbre d'actionneur ;
- un moyen de rappel élastique est interposé entre l'organe de commande et un support fixe ;
- la rotation de l'organe de commande est limitée dans les deux sens par des butées angulaires fixes ;
- l'arbre d'actionneur comporte un rotor équipé d'au moins un premier élément ferromagnétique et le corps d'actionneur comporte un stator équipé d'au moins un électroaimant commandé susceptible d'attirer le premier élément ferromagnétique du rotor pour entraîner l'arbre vers sa deuxième position angulaire extrême lorsqu'il est alimenté en courant électrique.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une vue en perspective d'un agencement de commande de sélection selon un exemple de l'état de la technique dans laquelle l'organe de commande est dans sa première position de sélection ;
[Fig. 2] la figure 2 est une vue de l'agencement de la figure 1 selon un autre angle de vue ;
[Fig. 3] la figure 3 est une vue analogue à celle de la figure 1 sur laquelle l'agencement de la figure 1 est représenté après que l'organe de commande ait pivoté angulairement vers sa deuxième position angulaire de sélection ;
[Fig. 4] la figure 4 est une vue de l'agencement de la figure 3 selon l'angle de vue de la figure 2 ;
[Fig. 5] la figure 5 est une vue en perspective d'un agencement de commande de sélection selon les enseignements de l'invention dans laquelle l'organe de commande est dans sa première position de sélection ;
[Fig. 6] la figure 6 est une vue en perspective d'un actionneur rotatif d'entraînement qui fait partie de l'agencement de la figure 1 et qui comporte une manivelle ;
[Fig. 7] la figure 7 est une vue en bout de l'agencement de commande représenté à la figure 5 ;
[Fig. 8] la figure 8 est une vue en coupe longitudinale verticale selon le plan de coupe 8-8 de la figure 7 qui représente l'actionneur rotatif d'entraînement lié avec un levier ;
[Fig. 9] la figure 9 est une vue similaire à celle de la figure 7 dans laquelle l'organe de commande est commandé dans une deuxième position angulaire de sélection par l'actionneur rotatif d'entraînement ;
[Fig. 10] la figure 10 est une vue en coupe longitudinale verticale selon le plan de coupe 10-10 de la figure 9 qui représente l'actionneur rotatif d'entraînement lié avec un levier ;
[Fig. 11] la figure 11 est une vue en coupe transversale qui représente très schématiquement l'intérieur de l'actionneur rotatif d'entraînement de la figure 6 ;
[Fig. 12] la figure 12 est une vue en perspective qui représente des butées angulaires extérieure de la clef d'interverrouillage de l'agencement de la figure 5 pour limiter le pivotement de l'organe de verrouillage entre ses deux positions angulaires de sélection, l'organe de commande occupant sa première position de sélection ;
[Fig. 13] la figure 13 est une vue en coupe selon le plan de coupe 13-13 de la figure 12 ;
[Fig. 14] la figure 14 est une vue similaire à celle de la figure 13 qui représente l'organe de commande dans sa deuxième position angulaire de sélection.

### DESCRIPTION DETAILLEE DES FIGURES

Dans la suite de la description, des éléments présentant une structure identique ou des fonctions analogues seront désignés par des mêmes références.

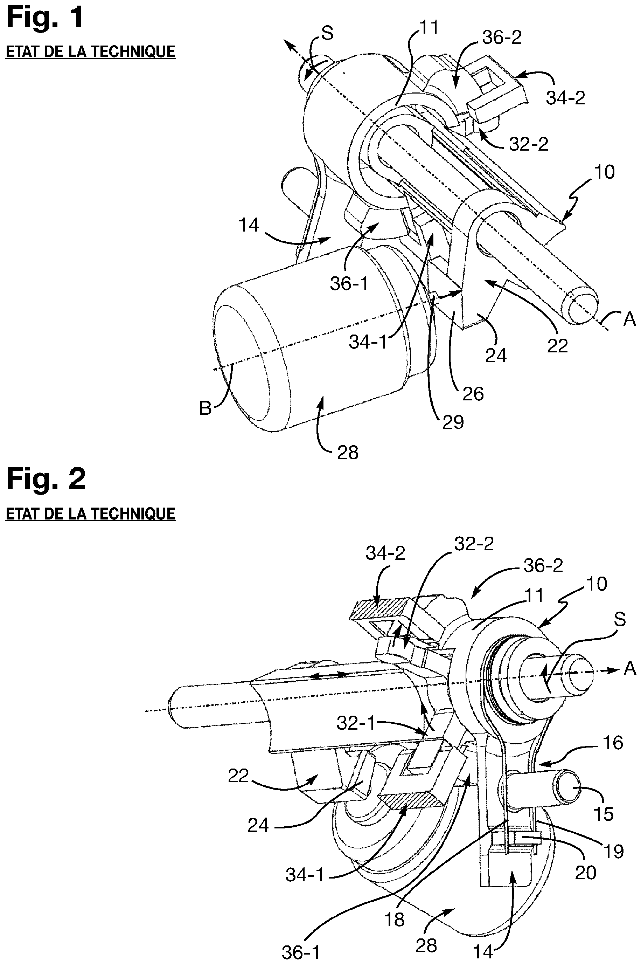

A la figure 1, on a représenté un agencement interne de commande appartenant à une boîte de vitesses mécanique qui, de manière connue, comporte essentiellement un organe 10 de commande qui est monté mobile axialement dans les deux sens le long d'un axe géométrique longitudinal A, orienté axialement d'arrière en avant, et qui est aussi monté rotatif, ou pivotant, dans les deux sens autour de ce même axe A.

La première position angulaire, dite première position de sélection, et illustrée notamment aux figures 1 et 2, est déterminée par une patte 14 d'orientation radiale appartenant à l'organe de commande 10 qui coopère avec des éléments fixes de butée angulaire appartenant par exemple au carter de la boîte.

Selon cette conception de l'état de la technique, l'organe de commande 10 est rappelé élastiquement vers sa première position par un moyen élastique de rappel 16 qui est ici réalisé sous la forme d'un ressort à fil, dit ressort externe 16, dont une branche 18 est entraînée par un doigt 20 de la patte 14 lorsque l'organe de commande 10 est entraîné en rotation dans le sens S indiqué aux figures 1 et 2, tandis qu'une branche 19 du ressort externe 16 est retenue par un pion 15 fixe, qui est par exemple solidaire du carter de la boîte.

Pour son entraînement en rotation dans le sens S, à l'encontre de l'effort de rappel qui lui est ici appliqué par le ressort externe 16, l'organe de commande 10 comporte une patte radiale d'actionnement 22 qui comporte une plaque d'actionnement 24 qui s'étend dans un plan parallèle à l'axe A.

Pour agir sur une face 26 d'actionnement de la plaque d'actionnement 24, il est prévu un actionneur linéaire commandé 28 qui est par exemple un vérin électromagnétique à solénoïde à simple effet dont la tige de sortie 29, ou tige d'actionnement, est montée coulissante selon un axe géométrique B qui est globalement orthogonal au plan de la face d'actionnement 26 et qui s'étend dans un plan radial orthogonal à l'axe A.

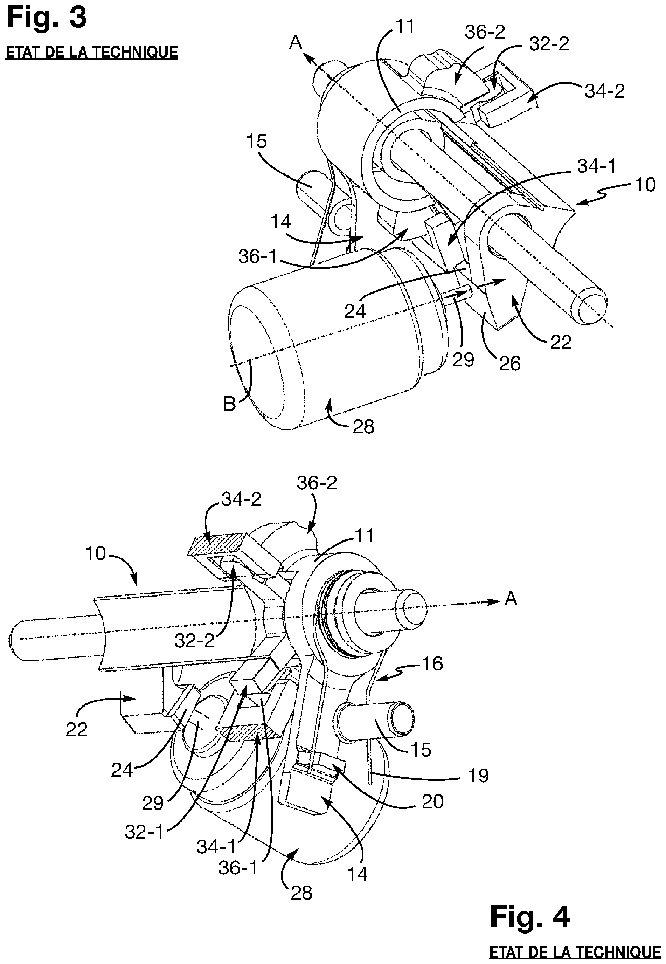

Lorsque l'actionneur 28 est commandé et alimenté en courant, la tige d'actionnement 29 se déplace selon l'axe B pour pousser sur la plaque d'actionnement 24 et provoquer la rotation, 10 dans le sens S, de l'organe de commande 10 vers sa deuxième position angulaire de sélection illustrée notamment aux figures 3 et 4, à l'encontre de l'effort élastique de rappel exercé par le ressort externe 16.

Lorsque l'on interrompt la commande et l'alimentation de l'alimentation électrique de l'actionneur 28, la tige d'actionnement 29 n'exerce plus d'effort et l'organe de commande 10 est rappelé élastiquement sous charge, par le ressort externe 16, vers sa première position angulaire de sélection illustrée aux figures 1 et 2.

Pour permettre le passage de différents rapports, dans l'une ou l'autre des deux lignes de sélection préalablement sélectionnée, il est prévu deux bras, ou doigts, radiaux de passage 32-1 et 32-2 qui tournent dans les deux sens et se déplacent axialement avec l'organe de commande 10.

Dans la première position de sélection, c'est le premier bras radial de passage 32-1 qui est reçu dans un crabot 34-1 qui, de manière connue, est relié à une première ligne de pignons de la boîte de vitesses.

Dans cette première position angulaire de sélection, le deuxième bras de passage 32-2 est dégagé hors d'un deuxième crabot associé 34-2 qui, de manière connue, est lui-même relié à une deuxième ligne de pignons de la boîte.

Comme on peut le voir aux figures 3 et 4 lorsque, sous l'action de l'actionneur 28, l'organe de commande 10 a pivoté angulairement depuis sa première position angulaire de sélection vers sa deuxième position angulaire de sélection, le premier bras de passage 32-1 est dégagé circonférentiellement, ou angulairement, hors du premier crabot 34-1 tandis que, à son tour, le deuxième bras de passage 32-2 est engagé dans le deuxième crabot 34-2.

Enfin, l'agencement comporte un composant 11 appelé clef d'inter-verrouillage qui est monté tournant avec l'organe de commande 10 et qui comporte deux blocs 36-1 et 36-2 de verrouillage dont chacun coopère alternativement avec son crabot 34-1, 34-2 associé pour le bloquer lorsque la ligne de sélection correspondante n'est pas sélectionnée.

En partant de la deuxième position angulaire de sélection illustrée aux figures 3 et 4, il est possible de déplacer axialement l'organe de commande 10 dans les deux sens de manière à provoquer des actions de passage, ou engagement, de rapports. A la différence de l'organe de commande 10, la clef d'interverrouillage 11 demeure fixe longitudinalement lorsque l'organe de commande 10 est déplacé axialement.

Dès qu'un engagement a été provoqué dans l'un ou l'autre sens axial, on peut relâcher l'effort de sélection appliqué par l'actionneur 28 sur l'organe 10. Il en résulte que le premier bras de passage 32-1 est alors en appui circonférentiel contre des portions de surface en vis-à-vis du premier crabot 34-1, et ceci sous charge du ressort externe 16.

Les déplacements axiaux de l'organe de commande 10 sont ainsi freinés, voire bloqués, par ces efforts de frottement générés entre les surfaces en contact du premier crabot 34-1 avec la portion en vis-à-vis d'une face du premier bras de passage 32-1.

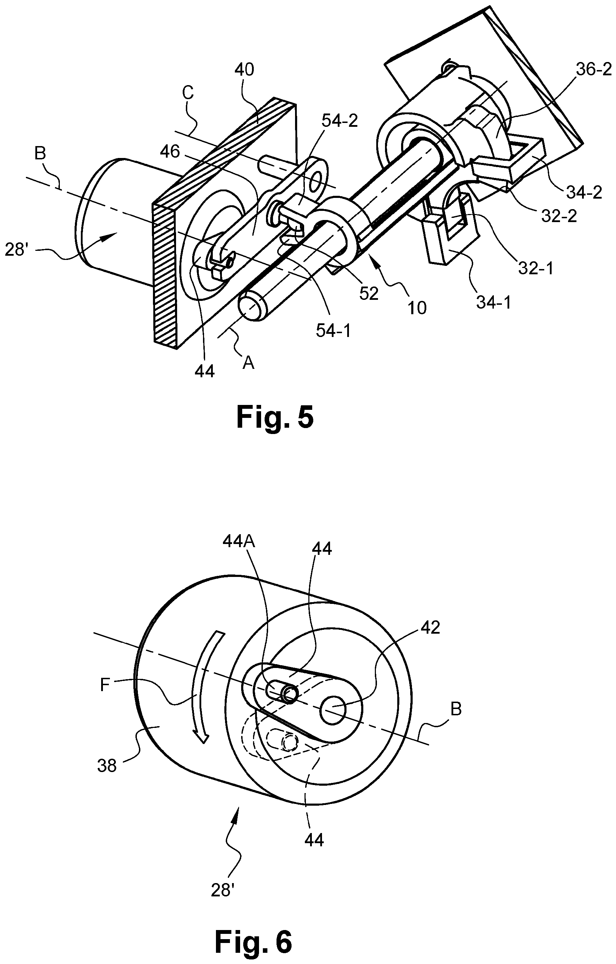

On décrira maintenant la conception selon l'invention illustrée aux figures 5 à 14 et selon laquelle l'actionneur commandé est un actionneur rotatif d'entrainement 28'.

L'actionneur rotatif d'entraînement 28' comporte un corps 38 d'actionneur fixe. Il s'agit ici d'un corps 38 de forme cylindrique. Le corps 38 est fixé à une platine 40 qui est fixe par rapport au carter de boîte comme cela est représenté à la figure 5.

Le corps 38 d'actionneur présente ici des dimensions et une forme similaires à celles de l'actionneur linéaire représenté aux figures 1 à 4. De plus, cet actionneur rotatif d'entraînement 28' est agencé sensiblement à la même place que l'actionneur linéaire 28 des figures 1 à 4. Ainsi, l'actionneur rotatif d'entraînement 28' n'est pas plus encombrant que l'actionneur linéaire 28 de l'état de la technique.

Comme représenté à la figure 6, l'actionneur rotatif d'entraînement 28' comporte en outre un arbre 42 d'actionneur monté rotatif dans le corps 38 autour d'un axe B de rotation. L'arbre 42 d'actionneur est susceptible d'être entraîné en rotation sur une course angulaire limitée, inférieure à un tour complet, entre une première position angulaire extrême et une deuxième position angulaire extrême. La course angulaire s'étend par exemple sur moins de 90°. La course angulaire s'éte nd par exemple entre 20°et 45.

L'axe B de rotation de l'arbre 42 d'actionneur est orthogonal à l'axe A de rotation de l'organe de commande 10.

L'actionneur rotatif d'entraînement 28' comporte aussi une manivelle 44 qui est solidaire en rotation de l'arbre 42 d'actionneur. La manivelle 44 s'étend ainsi perpendiculairement à l'arbre 42 d'actionneur. Elle présente un tronçon 44A excentré par rapport à l'axe B qui est destiné à appliquer l'effort d'actionnement à l'organe de commande 10 pour provoquer sa rotation dans le premier sens S.

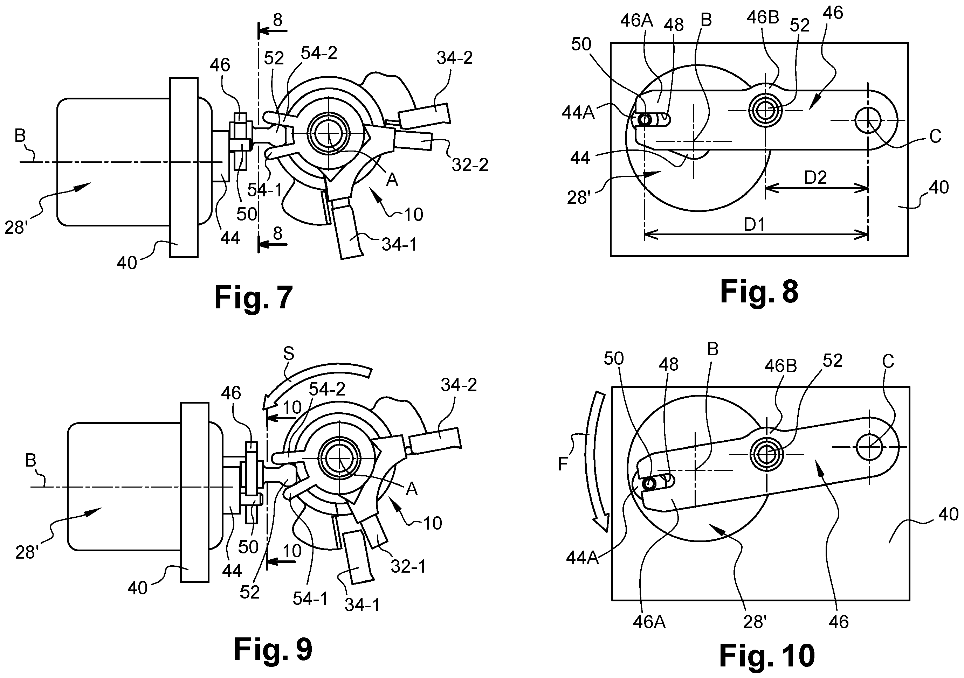

On a représenté à la figure 6 la position de la manivelle 44 en traits continus lorsque l'arbre 42 d'actionneur occupe sa première position angulaire extrême et en traits discontinus lorsque l'arbre 42 d'actionneur occupe sa deuxième position angulaire extrême. Le sens de rotation de l'arbre 42 d'actionneur depuis sa première position angulaire extrême jusqu'à sa deuxième position angulaire extrême est indiqué par la flèche F aux figures 6 et 10.

L'actionneur rotatif d'entraînement 28' agit ici sur l'organe de commande 10 par l'intermédiaire d'un levier 46 qui est visible aux figures 5 et 7 à 10. Le levier 46 permet avantageusement de transmettre l'effort d'actionnement produit par l'actionneur rotatif d'entraînement 28' à l'organe de commande 10 en démultipliant cet effort.

Le levier 46 qui est monté pivotant autour d'un axe C parallèle à l'arbre 42 d'actionneur sur la platine 40 fixe. Le levier 46 se présente ici sous la forme d'une barre globalement longitudinale. Le levier 46 présente un premier tronçon 46A de liaison avec la manivelle 44.

La liaison entre le levier 46 et la manivelle 44 est formée par une liaison composée d'une liaison pivot autour d'un axe parallèle à l'axe B de l'arbre 42 d'actionneur et d'une liaison coulissante selon une direction de l'axe principal du levier 46.

Dans l'exemple représenté aux figures 8 et 10, le premier tronçon 46A de liaison du levier 46 présente une fente 48 orientée selon son axe principal et le tronçon 44A excentré de la manivelle 44 comporte un maneton 50 qui est reçu coulissant et pivotant dans la fente 48 pour assurer la liaison composée entre la manivelle 44 et le levier 46. Pour faciliter le montage du maneton 50, la fente 48 est ici débouchante à l'extrémité du levier 46.

Selon une variante non représentée de l'invention, par inversion mécanique, la fente est portée par la manivelle, tandis que le maneton est porté par le levier.

Le levier 46 présente aussi un deuxième tronçon 46B de liaison avec l'organe de commande 10. Pour ce faire, le deuxième tronçon 46B est agencé en vis-à-vis de l'organe de commande 10. La liaison entre le deuxième tronçon 46B du levier et l'organe de commande 10 est réalisée par contact entre une tête 52, qui est ici portée par le levier 46 et une face d'actionnement d'au moins une première palette 54-1 qui s'étend radialement par rapport à l'axe A de pivotement de l'organe de commande 10.

Dans le mode de réalisation représenté aux figures, le rappel de l'organe de commande 10 depuis sa deuxième position angulaire de sélection vers sa première position angulaire de sélection, dans un sens inverse à celui indiqué par la flèche S, est aussi réalisé par l'intermédiaire du levier. A cet égard, l'organe de commande 10 comporte aussi une deuxième palette 54-2 qui s'étend radialement par rapport à l'axe A de pivotement de l'organe de commande 10 et qui est décalée angulairement par rapport à la première palette 54-1. La tête 52 est ainsi reçue circonférentiellement entre les deux palettes 54-1, 54-2.

La tête 52 interagit par contact plan avec chacune des deux palettes 54-1 et 54-2. Un mouvement de coulissement longitudinal des palettes 54-1, 54-2 par glissement sur la tête 52 est autorisé lorsque l'organe de commande 10 est déplacé longitudinalement pour engager un rapport.

Selon une variante non représentée de l'invention, et par inversion mécanique, les palettes sont portées par le levier et la tête est portée par l'organe de commande.

Pour permettre une démultiplication de l'effort d'actionnement produit par l'actionneur rotatif d'entraînement 28', la distance D1 entre le premier tronçon 46A de liaison et l'axe C de pivotement du levier 46 est supérieure à la distance D2 entre le deuxième tronçon 46B de liaison et l'axe C de pivotement du levier 46 comme cela est visible à la figure 8.

Il s'agit ici d'un levier dit de deuxième classe dans lequel l'effort exercé sur le premier tronçon 46A de liaison par la manivelle 44 et l'effort exercé par le deuxième tronçon 46B de liaison sur l'organe de commande 10 sont dirigés dans le même sens. Le deuxième tronçon 46B de liaison est ainsi interposé entre l'axe C de pivotement du levier 46 et son premier tronçon 46A de liaison.

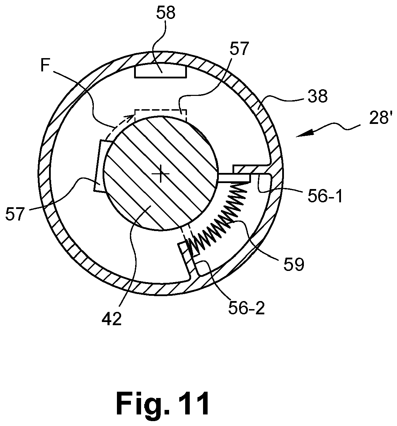

Comme cela est représenté très schématiquement à la figure 11, l'actionneur rotatif d'entraînement 28' est ici un actionneur électromagnétique qui comporte des butées angulaires internes 56-1, 56-2 fixes par rapport au corps 38 pour limiter le pivotement de l'arbre 42 d'actionneur dans les deux sens entre ses deux positions angulaires extrêmes. Les butées angulaires internes 56-1, 56-2 peuvent être fixes ou réglables.

L'arbre 42 d'actionneur comporte un rotor qui est équipé d'au moins un élément 57 ferromagnétique. L'élément 57 ferromagnétique est solidaire en rotation de l'arbre 42. Il s'agit par exemple d'un aimant permanent.

Le corps 38 d'actionneur comporte un stator qui est équipé d'au moins un électroaimant 58 commandé qui est susceptible d'attirer l'élément ferromagnétique du rotor pour entraîner l'arbre 42 vers sa deuxième position angulaire extrême lorsqu'il est alimenté en courant électrique, comme cela est représenté en traits interrompus à la figure 11.

En variante, l'actionneur rotatif d'entraînement est formé par un vérin tournant qui est alimenté par un fluide d'actionnement gazeux ou liquide.

Avantageusement, un moyen de rappel élastique est interposé entre le corps de l'actionneur et l'arbre d'actionneur pour rappeler l'arbre 42 d'actionneur vers sa première position angulaire extrême lorsque l'électroaimant 58 n'est plus alimenté en courant électrique. Il s'agit par exemple d'un ressort 59 interne de torsion qui est agencé autour de l'arbre 42 d'actionneur.

Dans ce cas, il est possible de supprimer le ressort externe 16 qui équipé le mode de réalisation représenté aux figures 1 à 4.

En variante non représentée, le ressort 16 de torsion est conservé de manière à assister le ressort 59 interne de l'actionneur rotatif d'entraînement pour rappeler l'organe de commande vers sa première position angulaire de sélection.

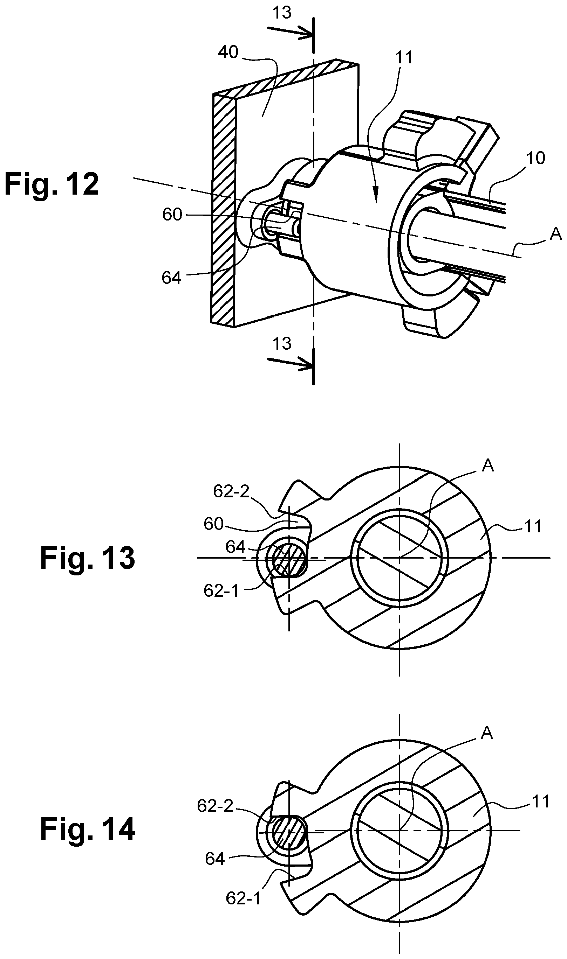

A titre complémentaire, mais non obligatoire et afin d'assurer en fonctionnement une position angulaire précise des bras radiaux de passage 32-1 et 32-2 en face des crabot 34-1, 34-2 associés, la clef d'interverrouillage 11 comporte ici un logement 60 qui est ouvert axialement vers l'avant et radialement, et qui est délimité angulairement par deux surfaces internes opposées de butée externes 62-1 et 62-2 illustrées aux figures 12 à 14.

Pour coopérer alternativement avec l'une ou l'autre de ces deux surfaces de butée externes 62-1 et 62-2, une autre portion appartenant à un élément fixe de carter de la boîte de vitesses ou d'un embrayage associé porte un pion d'indexation angulaire 64 qui est un doigt cylindrique d'orientation axiale parallèle à l'axe A de l'organe de commande 10 et de la clef d'interverrouillage 11.

Lors du fonctionnement de l'organe de commande 10, ce dernier est maintenu élastiquement par le ressort interne 59 par défaut dans sa première position angulaire de sélection comme représenté aux figures 7 et 8. Avantageusement, la première position angulaire extrême de l'arbre 42 coïncide avec la première position angulaire de sélection de l'organe de commande 10.

Lorsqu'on commande le pivotement de l'actionneur rotatif d'entraînement 28' vers sa deuxième position angulaire extrême à l'encontre de l'effort de rappel élastique du ressort interne 59, la manivelle 44 tourne dans le sens F jusqu'à sa deuxième position angulaire extrême. Ceci provoque le pivotement vers le bas du levier 46 qui agit, via la tête 52 sur la palette 54-1 inférieure de l'organe de commande 10. Ce dernier pivote ainsi depuis sa première position angulaire de sélection jusqu'à sa deuxième position angulaire de sélection comme indiqué par la flèche S de la figure 9.

La deuxième position angulaire extrême de l'arbre 42 coïncide avantageusement avec la deuxième position angulaire de sélection de l'organe de commande 10.

En fin de cette course d'actionnement, l'organe de commande 10 est dans sa deuxième position angulaire de sélection correspondant à la position illustrée en référence aux figures 9 et 10.

Lors de ce changement de ligne de sélection, dans l'hypothèse où le bras de passage 32-2 entre en contact avec des chanfreins d'entrée du crabot associé 34-2, le couple fourni par l'actionneur rotatif d'entraînement 28' démultiplié par le levier 46 est suffisant pour déplacer la fourchette et permettre l'entrée du bras de passage dans le crabot.

Pour ramener ou rappeler l'organe de commande 10 vers sa première position angulaire de sélection, c'est le ressort interne 59 de rappel qui permet au bras de passage 32-1 de déplacer le crabot associé 34-1 avec l'aide de chanfreins.

L'action du ressort interne 59 provoque la rotation de l'arbre 42 et de la manivelle 4 dans un sens inverse à celui de la flèche F depuis sa deuxième position angulaire extrême jusqu'à sa première position angulaire extrême. Ceci provoque le pivotement du levier 46 et la rotation dans le sens horaire de l'organe de commande 10 autour de son axe A, en considérant la figure 7, par contact entre la tête 52 et la palette 54-2 supérieure.

L'effort produit par le ressort interne 59 est ainsi avantageusement démultiplié par le levier 46.

La solution qui vient d'être décrite en référence aux figures 5 et suivantes peut être mise en oeuvre dans le même encombrement que celle selon l'état de la technique qui est illustrée aux figures 1 à 4.

Dans cet encombrement, le dimensionnement de l'actionneur rotatif d'entraînement 28' est suffisant pour disposer d'un couple important permettant de remédier aux inconvénients des solutions selon l'état de la technique.

Le levier 46 permet avantageusement de démultiplier l'effort produit par l'actionneur dans les deux sens.

L'invention trouve notamment à s'appliquer pour la commande des changements de rapports dans une boîte de vitesses à commande dite robotisée.

## Revendications

1. Agencement pour la commande interne de la sélection de lignes de rapports dans une boîte de vitesses qui comporte :
- un organe de commande de sélection (10) qui est monté rotatif, dans les deux sens, entre au moins une première position angulaire de sélection et une deuxième position angulaire de sélection dont chacune est associée à une première ligne de sélection et à une deuxième ligne de sélection respectivement, l'organe de commande de sélection (10) est en outre monté coulissant axialement dans les deux sens;
- un actionneur (28') commandé qui peut appliquer un effort d'actionnement à l'organe de commande (10) pour provoquer sa rotation au moins dans un premier sens (S), depuis sa première position angulaire de sélection vers sa deuxième position angulaire de sélection, l'actionneur étant un actionneur rotatif (28')
comportant :
- un corps (38) d'actionneur fixe ;
- un arbre (42) d'actionneur qui est monté rotatif dans le corps (38) d'actionneur et qui est susceptible d'être entraîné en rotation sur une course angulaire limitée entre une première position angulaire extrême et une deuxième position angulaire extrême ; **caractérisé en ce qu'**il comporte de plus
- une manivelle (44) qui est solidaire en rotation de l'arbre (42) et qui comporte un tronçon (44A, 50) excentré qui applique l'effort d'actionnement à l'organe de commande (10) pour provoquer sa rotation dans le premier sens (S), et **en ce que** l'axe (B) de rotation de l'arbre (42) d'actionneur est orthogonal à l'axe (A) de rotation de l'organe de commande (10) et **en ce que** l'effort d'actionnement est transmis à l'organe de commande (10) par l'intermédiaire d'un levier (46) qui est monté pivotant autour d'un axe (C) parallèle à l'arbre (42) d'actionneur sur une platine (40) fixe par rapport au corps (38) d'actionneur.

2. Agencement selon la revendication précédente, **caractérisé en ce que** le levier (46) présente un premier tronçon (46A) de liaison avec la manivelle (44) et un deuxième tronçon (46B) de liaison avec l'organe de commande (10), la distance (D1) entre le premier tronçon (46A) et l'axe (C) de pivotement du levier (46) étant supérieure à la distance (D2) entre le deuxième tronçon (46B) et l'axe (C) de pivotement du levier (46).

3. Agencement selon la revendication précédente, **caractérisé en ce que** la liaison entre le deuxième tronçon (46B) du levier (46) et l'organe de commande (10) est réalisé par une tête (52) portée par l'un des deux éléments parmi le levier (46) ou l'organe de commande (10), la tête étant en contact avec au moins une palette (54-1, 54-2) radiale portée par l'autre desdits deux éléments.

4. Agencement selon l'une quelconque des revendications précédentes, **caractérisé en ce qu'**il comporte au moins un moyen (16, 59) de rappel en rotation de l'organe de commande (10) vers sa première position angulaire de sélection.

5. Agencement selon la revendication précédente, **caractérisé en ce qu'**un moyen de rappel élastique (59) est interposé entre le corps (38) de l'actionneur et l'arbre (42) d'actionneur.

6. Agencement selon l'une quelconque des revendications 6 ou 7, **caractérisé en ce qu'**un moyen de rappel élastique (16) est interposé entre l'organe de commande (10) et un support fixe (40).

7. Agencement selon l'une quelconque des revendications précédentes, **caractérisé en ce que** la rotation de l'organe de commande (10) est limitée dans les deux sens par des butées angulaires fixes (56-1, 56-2, 62-1, 62-2).

8. Agencement selon l'une quelconque des revendications précédentes, **caractérisé en ce que** l'arbre (42) d'actionneur comporte un rotor équipé d'au moins un premier élément ferromagnétique (58) et le corps (38) d'actionneur comporte un stator équipé d'au moins un électroaimant (58) commandé susceptible d'attirer le premier élément ferromagnétique (57) du rotor pour entraîner l'arbre (42) vers sa deuxième position angulaire extrême lorsqu'il est alimenté en courant électrique.

## Patentansprüche

1. Anordnung für die interne Steuerung der Auswahl von Gangsträngen in einem Getriebe, umfassend:
- ein Auswahlsteuerorgan (10), das in beide Richtungen drehbar zwischen mindestens einer ersten Auswahlwinkelposition und einer zweiten Auswahlwinkelposition montiert ist, von denen jede mit einem ersten Auswahlstrang bzw. einem zweiten Auswahlstrang assoziiert ist, wobei das Auswahlsteuerorgan (10) ferner in beide Richtungen axial verschiebbar montiert ist,
- ein gesteuertes Stellglied (28'), das eine Betätigungskraft auf das Steuerorgan (10) ausüben kann, um dessen Drehung in mindestens einer ersten Richtung (S) von seiner ersten Auswahlwinkelposition in seine zweite Auswahlwinkelposition zu bewirken, wobei das Stellglied ein Drehstellglied (28') ist,
umfassend:
- einen feststehenden Stellgliedkörper (38);
- eine Stellgliedwelle (42) die drehbar in dem Stellgliedkörper (38) montiert ist und über einen begrenzten Drehwinkelbereich hinweg zwischen einer ersten Winkelendposition und einer zweiten Winkelendposition in Drehung versetzt werden kann; **dadurch gekennzeichnet, dass** es ferner Folgendes umfasst:
- eine Kurbel (44), die drehfest mit der Welle (42) verbunden ist und einen Exzenterabschnitt (44A, 50) umfasst, der die Betätigungskraft auf das Steuerorgan (10) aufbringt, um dessen Drehung in der ersten Richtung (S) zu bewirken,
und dass die Drehachse (B) der Stellgliedwelle (42) zu der Drehachse (A) des Steuerorgans (10) orthogonal ist und dass die Betätigungskraft mit Hilfe eines Hebels (46) auf das Steuerorgan (10) übertragen wird, welcher schwenkbar um eine zu der Stellgliedwelle (42) parallel verlaufenden Achse (C) an einer mit Bezug auf den Stellgliedkörper (38) feststehenden Platte (40) montiert ist.

2. Anordnung nach dem vorhergehenden Anspruch, **dadurch gekennzeichnet, dass** der Hebel (46) einen ersten Abschnitt (46A) zur Verbindung mit der Kurbel (44) und einen zweiten Abschnitt (46B) zur Verbindung mit dem Steuerorgan (10) aufweist, wobei der Abstand (D1) zwischen dem ersten Abschnitt (46A) und der Schwenkachse (C) des Hebels (46) größer ist als der Abstand (D2) zwischen dem zweiten Abschnitt (46B) und der Schwenkachse (C) des Hebels (46) .

3. Anordnung nach dem vorhergehenden Anspruch, **dadurch gekennzeichnet, dass** die Verbindung zwischen dem zweiten Abschnitt (46B) des Hebels (46) und dem Steuerorgan (10) über einen Kopf (52) erfolgt, der von einem von den zwei Elementen von dem Hebel (46) oder dem Steuerorgan (10) getragen wird, wobei der Kopf mit mindestens einem radialen Flügel (54-1, 54-2) in Kontakt ist, der von dem anderen der zwei Elemente getragen wird.

4. Anordnung nach einem beliebigen der vorhergehenden Ansprüche, **dadurch gekennzeichnet, dass** sie mindestens ein Mittel (16, 59) zur Drehrückstellung des Steuerorgans (10) in seine erste Auswahlwinkelposition umfasst.

5. Anordnung nach dem vorhergehenden Anspruch, **dadurch gekennzeichnet, dass** zwischen dem Stellgliedkörper (38) und der Stellgliedwelle (42) ein elastisches Rückstellmittel (59) eingefügt ist.

6. Anordnung nach einem beliebigen der Ansprüche 6 oder 7, **dadurch gekennzeichnet, dass** zwischen dem Steuerorgan (10) und einem feststehenden Träger (40) ein elastisches Rückstellmittel (16) eingefügt ist.

7. Anordnung nach einem beliebigen der vorhergehenden Ansprüche, **dadurch gekennzeichnet, dass** die Drehung des Steuerorgans (10) in beiden Richtungen durch feststehende Winkelanschläge (56-1, 56-2, 62-1, 62-2) begrenzt wird.

8. Anordnung nach einem beliebigen der vorhergehenden Ansprüche, **dadurch gekennzeichnet, dass** die Stellgliedwelle (42) einen Rotor umfasst, der mit mindestens einem ersten ferromagnetischen Element (58) ausgerüstet ist, und der Stellgliedkörper (38) einen Stator umfasst, der mit mindestens einem gesteuerten Elektromagneten (58) ausgerüstet ist, der, wenn er mit elektrischem Strom versorgt wird, das erste ferromagnetische Element (57) des Rotors anziehen kann, um die Welle (42) in ihre zweite Winkelendposition zu treiben.

## Claims

1. Arrangement for the internal control of the selection of gear lines in a gearbox, which comprises:
- a selection control member (10) which is mounted so as to be rotatable, in both directions, between at least a first angular selection position and a second angular selection position, each of which is associated with a first selection line and with a second selection line respectively, the selection control member (10) additionally being mounted so as to slide axially in both directions;
- a controlled actuator (28') which can apply an actuating force to the control member (10) to cause it to rotate at least in a first direction (S), from its first angular selection position to its second angular selection position, the actuator being a rotary actuator (28')
comprising:
- a fixed actuator body (38);
- an actuator shaft (42) which is mounted so as to be rotatable in the actuator body (38) and which is capable of being driven to rotate over a limited angular travel between a first angular end position and a second angular end position;
**characterized in that** it further comprises:
- a crank (44) which is locked in rotation with the shaft (42) and which comprises an eccentric section (44A, 50) which applies the actuating force to the control member (10) to cause it to rotate in the first direction (S),
and **in that** the axis (B) of rotation of the actuator shaft (42) is orthogonal to the axis (A) of rotation of the control member (10), and **in that** the actuating force is transmitted to the control member (10) via a lever (46) which is mounted so as to pivot about an axis (C) parallel to the actuator shaft (42) on a plate (40) which is fixed with respect to the actuator body (38).

2. Arrangement according to the preceding claim, **characterized in that** the lever (46) has a first section (46A) for connection with the crank (44) and a second section (46B) for connection with the control member (10), the distance (D1) between the first section (46A) and the pivot axis (C) of the lever (46) being greater than the distance (D2) between the second section (46B) and the pivot axis (C) of the lever (46).

3. Arrangement according to the preceding claim, **characterized in that** the connection between the second section (46B) of the lever (46) and the control member (10) is produced by a head (52) borne by one of the two elements among the lever (46) or the control member (10), the head being in contact with at least one radial blade (54-1, 54-2) borne by the other of said two elements.

4. Arrangement according to any one of the preceding claims, **characterized in that** it comprises at least one return means (16, 59) for rotationally returning the control member (10) to its first angular selection position.

5. Arrangement according to the preceding claim, **characterized in that** an elastic return means (59) is interposed between the body (38) of the actuator and the actuator shaft (42).

6. Arrangement according to either one of Claims 6 and 7, **characterized in that** an elastic return means (16) is interposed between the control member (10) and a fixed support (40).

7. Arrangement according to any one of the preceding claims, **characterized in that** the rotation of the control member (10) is limited in both directions by fixed angular stops (56-1, 56-2, 62-1, 62-2).

8. Arrangement according to any one of the preceding claims, **characterized in that** the actuator shaft (42) comprises a rotor equipped with at least a first ferromagnetic element (58) and the actuator body (38) comprises a stator equipped with at least one controlled electromagnet (58) capable of attracting the first ferromagnetic element (57) of the rotor in order to drive the shaft (42) towards its second angular end position when it is supplied with electric current.
